# EUROPÄISCHE PATENTSCHRIFT

(11) **EP 1 025 661 B1**
(45) Veröffentlichungstag und Bekanntmachung des Hinweises auf die Patenterteilung: **11.06.2003**
(21) Anmeldenummer: 98943691.0
(22) Anmeldetag: 14.07.1998
(51) Int. Cl.: H04B 10/24, H04J 14/02

(54) **TRANSCEIVER FÜR WELLENLÄNGENMULTIPLEX-VERFAHREN**
TRANSCEIVER FOR WAVELENGTH MULTIPLEXING PROCESSES
EMETTEUR-RECEPTEUR DESTINE A UN PROCEDE DE MULTIPLEXAGE PAR REPARTITION EN LONGUEUR D'ONDE

(30) Priorität: 21.10.1997 DE 19746350
(43) Veröffentlichungstag der Anmeldung: 09.08.2000
(73) Patentinhaber: ROBERT BOSCH GMBH, 70442 Stuttgart (DE)
(72) Erfinder: SCHUNK, Nikolaus, D-31139 Hildesheim (DE)
(86) Internationale Anmeldenummer: DE9801966
(87) Internationale Veröffentlichungsnummer: WO99021304

(56) Entgegenhaltungen:
- DE-A- 1 951 948
- DE-A- 3 217 610
- GB-A- 2 308 461
- PATENT ABSTRACTS OF JAPAN vol. 018, no. 629 (E-1637), 30. November 1994 & JP 06 244797 A (FUJI ELELCTROCHEM CO LTD), 2. September 1994

## Beschreibung

### Stand der Technik

Die Erfindung geht aus von einem Tranceiver für den Einsatz in einem Wellenlängenmultiplex-Übertragungsverfahren, wie in der DE-A-195 19 486 beschrieben.
Die GB - A - 2 308 461 offenbart einen optischen Sender mit einem reflektierenden Bandpaßfilter.

Aus dem Stand der Technik sind Transceiver für den Einsatz im Weilenlängenmultiplex-Übertragungsverfahren bekannt, die mehrere Eingänge und Ausgänge über Glasraserankopplung besitzen. Dabei werden die Wellenlängen streng getrennt, damit keine Störungen des Senders und des Empfängers auftreten. Einströmungen von anderen als den beabsichtigten Wellenlängen führen zu Störungen des Senders, d.h. der emittierenden Laserquelle. Auch das Einstreuen von Signalen anderer Wellenlänge als der gewünschten auf der Empfangsseite führt zu einer Verfälschung der Signale durch Überlagerung mehrerer Signalgruppen.

### Vorteile der Erfindung

Der erfindungsgemäße Transceiver mit den kennzeichnenden Merkmalen des Hauptanspruchs hat demgegenüber den Vorteil, daß die ein- und ausgehenden Signale mindestens über ein Michelson-Bandpaßfilter in ihren Wellenlängen getrennt werden. Dadurch bleiben sowohl Empfänger als auch Sender vor Signalen mit Wellenlängen, die dieser Transceiver nicht empfangen oder senden soll, geschützt.

Durch die in den Unteransprüchen aufgeführten Maßnahmen ist eine vorteilhafte Weiterbildung und Verbesserung des im Hauptanspruch angegebenen Transceivers möglich.

Besonders vorteilhaft ist ein Transceiver, der über eine optische Faser in das Wellenlängenmultiplex-Netz angekoppelt ist. Im Transceiver werden dann die eingehenden und ausgehenden Signale unterschiedlicher Wellenlängen über die Bandpaßfilter getrennt und entweder den empfangenden Fotodioden zugeführt oder im Fall des Senders über die Faser ausgekoppelt.

Die vorteilhafte Ausführungsform besitzt zwei getrennte optische Fasern für Ein- und Ausgang des Transceivers. Dadurch erhält man den Vorteil, daß die Laserquelle auf derselben Wellenlänge wie das Empfangssignal senden kann. Die Wellenlänge der Laserquelle muß sich nicht wie beim Anschluß mit einer Faser von der Empfangswellenlänge unterscheiden. Eine vorteilhafte Ausführungsform besitzt eine Wellenleiterfotodiode als Empfänger, die auf einfache Weise auf einem Siliziumchip integriert werden kann, und bei der die Einkopplung des empfangenen Lichts in der Ebene des planaren Wellenleiters einfach möglich ist.

Eine vorteilhafte Ausführungsform der Sendequelle besteht in einer Realisierung mit einem Halbleiterlaser und einem wellenlängenselektiven Braggitter, daß in die planare Glaswellenleiterstruktur auf dem Siliziumchio mittels UV-Licht eingebracht wurde. Dadurch wird eine sehr stabile wellenlängenselektive Quelle realisiert. Ebenso ist es möglich, die Sendeequelle durch einen Glaswellenleiterlaser zu realisieren.

Vorteilhafterweise werden die reflektiven Bandpaßfilter so ausgeführt, daß in einem Mach-Zehnder-Interferometeraufbau (2 3dB-Koppler in Reihe geschaltet) durch UV-induzierte Bragg-Gitter in den Verbindungsarmen von Eingangs- und Ausgangs-3dB-Koppler die gewünschte Wellenlänge an den Eingang reflektiert wird, an den das Eingangssignal nicht angeschlossen ist. Bzgl. der Reflexionscharakteristik der UV-induzierten Bragg-Gitter stellt diese Anordnung ein Wellenlängen-selektives Michelson-Interferometer dar. Es findet eine gezielte Verarbeitung, Ein- oder Auskopplung, des Sende- bzw. Empfangssignals statt. Störende Wellenlängen durch Wellenlängenübersprechen durchlaufen die kaskadierten Bandpaßfilter ohne Reflexion und werden am Ende abgesumpft.

### Zeichnung

Ausführungsbeispiele der Erfindung sind in den Zeichnungen dargestellt und in der nachfolgenden Beschreibung näher erläutert. Es zeigt:
Figur 1 einen Transceiver mit einem Faseranschluß,.
Figur 2 ein Schema eines Transceivers mit einem Faseranschluß,
Figur 3 ein Schema eines Transceivers mit zwei Faseranschlüssen und
Figur 4 ein Transceiver mit zwei Faseranschlüssen.

### Beschreibung des Ausführungsbeispiels

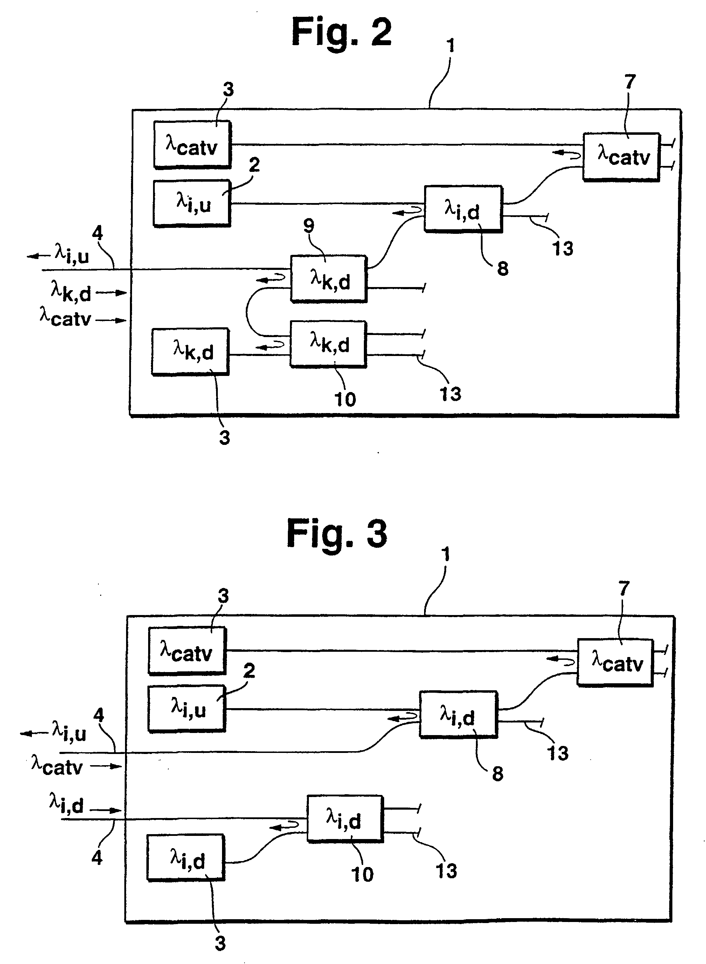

Figur 2 zeigt einen Transceiver 1, der auf einem Siliziumchip 5 aufgebaut ist. Auf dem Siliziumchip aufgebaut sind Empfänger 3, die über planare Wellenleiterstrukturen und Bandpaßfilter 7, 8, 9 und 10 mit einer Glasfaser 4 verbunden sind. Die Empfänger besitzen Kontakte, die für ihre elektrische Ansteuerung dienen. Ebenso auf dem Siliziumchip 5 ist ein Sender 2 aufgebaut, dessen Signal über ein Bragggitter 6 und Bandpaßfilter 8 und 9 in die Faser 4 einkoppelt. Die planare Wellenleiterstruktur wird aus dotiertem Glas hergestellt, in das die erforderlichen Bragggitter 6 sowie die Bandpaßfilter 7, 8, 9 und 10 mit Hilfe von UV-Licht angeschrieben werden können. Die Bandpaßfilter 7, 8, 9 und 10 bestehen aus einem Mach-Zehnder-Interferometer, das für die Reflexion als Michelson -Interferometer ausgelegt ist, bei dem nur das Signal mit der Wellenlänge der UV-induzierten Bragg-Gitter reflektiert wird. Für alle anderen Wellenlängen ist das Mach-Zehnder-Interferometer durchlässig. Die offenen Enden sind jeweils reflexionsfrei abgeschlossen.

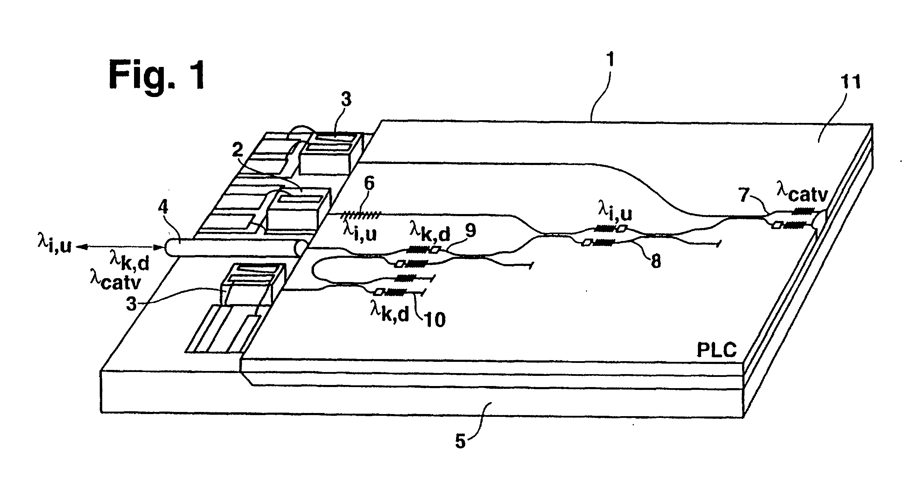

Figur 2 stellt in schematischer Form die Ausführung von Figur 1 dar. In diesem Beispiel empfängt der Transceiver zwei unterschiedliche Signale λ_{k,d} ein Downstream-Signal sowie zum Beispiel λ_{catv} ein Signal, daß einen Fernsehempfang ermöglicht. Die Signale der beiden Wellenlängen werden über die Glasfaser 4 in den Transceiver 1 eingespeist. Dort gelangen sie zunächst zum ersten Bandpaßfilter 9, an dem das Signal der Wellenlänge λ_{k,d} reflektiert wird. Es wird nur das Eingangssignal λ_{catv} durchgelassen. Das Signal mit der Wellenlänge λ_{k,d} wird zum Bandpaßfilter 10 geleitet, daß ebenfalls Signale der Wellenlänge λ_{k,d} reflektiert und zum Empfänger 3 sendet. Vorteilhaft ist es, den 180°-Streifenwellenleiterbogen durch ein weiteres Bandpaßfilter bei λ_{k,d} auszuführen. Das Bandpaßfilter 9 läßt die anderen Signale, z.B. das Signal mit λ_{catv} zum nächsten Bandpaßfilter 8 durch. Dieses Bandpaßfilter dient sendeseitig zum Auskoppeln des Signals und läßt daher ein Signal der Wellenlänge λ_{catv} ebenfalls durch. Das Signal gelangt zum Bandpaßfilter 7, an dem es zum Empfänger 3 reflektiert wird. Der Sender 2 emittiert auf der Wellenlänge λ_{i,u} d.h. auf einer Wellenlänge i in upstream-Richtung. Das Signal der Laserquelle wird am Bandpaßfilter 8 reflektiert, gelangt in das Bandpaßfilter 9, das es ungehindert durchläuft. Die einzelnen Bandpaßfilter müssen sehr genau auf die einzelnen Empfangs- und Sendewellenlängen abgestimmt sein, damit Wellenlängenübersprechen vermieden wird bzw. keinen Einfluß auf die Empfangssignale hat. Die offenen Enden 13 der Bandpaßfilter sind reflexionsfreie Abschlüsse, so daß keine reflektierten Signale den Transceiver beeinflussen können.

Bei dieser Ausführungsform ist es ohne weiteres möglich, eine Gruppe von Wellenlängen λ_{k,d} einzuspeisen und über Bandpaßfilter zu trennen. Limitiert wird ein solcher Transceiver durch Einkoppelverluste sowie Verluste in den einzelnen Bandpaßfiltern. Als Sender für einen solchen Transceiver sind modulierbare Quellen bei unterschiedlichen Wellenlängen einsetzbar, wie sie z.B. in der parallelen deutschen Patentanmeldung mit dem Aktenzeichen 19745466.6 beschrieben werden. Eine vorteilhafte Ausführungsform für die empfangende Diode ist aus "selective area impurity doped planar edge...," Kato et al. Electronic letters, vol. 32, No. 22, Seite 207 und 208, 1996 bekannt. Solche Fotodioden weisen eine große empfindliche Zone zur Detektion von Signalen auf und besitzen gleichzeitig die Eigenschaft, daß die elektrischen Signale von ihrer Oberfläche abgegriffen werden können. Ihre große Koppeltoleranz macht sie aufgrund der passiven Koppeltechnik für den Einsatz in einer integrierten Optik geeignet.

Figur 3 zeigt eine Ausführungsform im Schema, die mit getrennten Eingängen für getrennte Wellenlängen realisiert wird. Über die Glasfasern 4 werden Signale unterschiedlicher Wellenlänge in den Transceiver 1 eingekoppelt. Über eine Faser wird z.B. das TV-Signal mit der Wellenlänge λ_{catv} eingekoppelt, während über die zweite Faser Signale der anderen Wellenlänge λ_{i,d} eingekoppelt werden. Die normalen Signale λ_{i,d} werden an Bandpaßfilter 10 reflektiert und vom Empfänger 3 detektiert. Über diesen Faseranschluß ist auch das Einspeisen von Signalen mehrerer Wellenlänge mit anschießender Trennung über Bandpaßfilter möglich. Über den Faseranschluß, über den beispielsweise das TV-Bild geleitet wird, läuft gleichzeitig das von der Laserdiode 2 gesendete Signal. Das von der Laserdiode erfolgte Signal wird vom Bandpaßfilter 8 reflektiert und über die Faser 4 ausgekoppelt. Der Bandpaßfilter 8 läßt gleichzeitig die eingehende Wellenlänge λ_{catv} durch, die am Bandpaßfilter 7 reflektiert und vom Empfänger 3 detektiert wird. Die offenen Ende der Bandpaßfilter sind jeweils jeder reflexionsfrei ausgebildet. Die Reflexionsfreiheit kann z.B. dadurch erzeugt werden, daß die offenen Enden an die Kante des Transceivers geführt werden, die rauh oder abgeschrägt ausgebildet ist. Es ist ebenfalls möglich, die offenen Enden in einem Wellensumpf enden zu lassen.

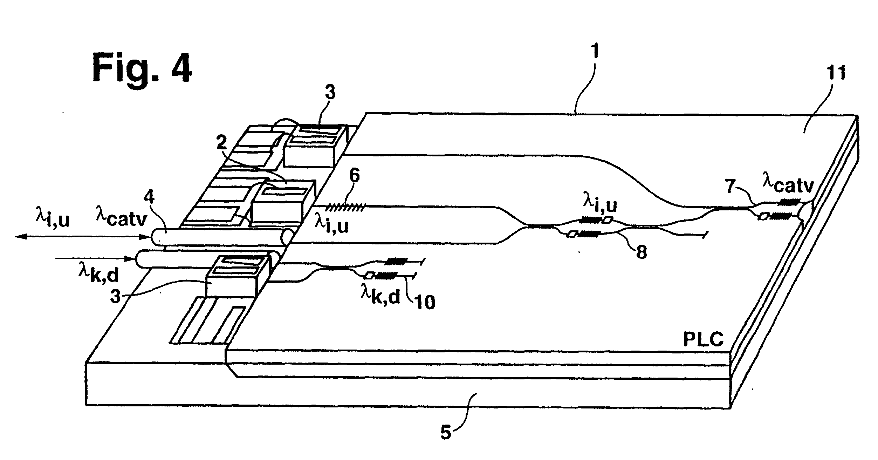

Figur 4 zeigt die Ausführungsform mit zwei Faseranschlüssen, mit zu Figur 1 analogen Bezeichnungen. Diese Ausführungsform hat den Vorteil, daß Sende- (λ_{i,u} )und Empfangswellenlänge ) (λ_{k,d =} λ_{i,u} ) gleich sein können. Dies hat beim Aufbau eines Wellenlängenmultiplexnetzes den Vorteil, daß pro Transceiver für Sende- und Empfangspfad die gleiche Wellenlänge verwendet werden kann.
Auch bei dieser Ausführungsform ist es möglich, über beide Faseranschlüsse auch mehrere Signale unterschiedlicher Wellenlänge zu empfangen, die über reflektive Bandpaßfilter getrennt werden.

## Patentansprüche

1. Transceiver, bei dem eingehende (λ_{k,d}) und ausgehende Signale (λ_{i,u}) jeweils mindestens ein Filter zur Trennung der Wellenlängen durchlaufen, für den Einsatz in einem Wellenlängenmultiplex-Übertragungsverfahren, mit
- einem optischen Sender mit einer modulierbaren, wellenlängenstabilen Laserquelle (2) und
- einem Empfänger (3),
**dadurch gekennzeichnet, dass** das Filter ein reflektierendes Michelson-Bandpaßfilter (7, 8, 9, 10) ist.

2. Transceiver nach Anspruch 1, **dadurch gekennzeichnet, daß** die eingehenden und ausgehenden Signale unterschiedliche Wellenlängenlängen besitzen und über eine optische Faser (4) ein- und ausgekoppelt werden.

3. Transceiver nach Anspruch 1, **dadurch gekennzeichnet, daß** die ein -und ausgehenden Signale gleiche Wellenlängen besitzen und über mindestens zwei getrennte optische Fasern (4) ein- und ausgekoppelt werden.

4. Transceiver nach Anspruch 1 bis 3, **dadurch gekennzeichnet, daß** der Empfänger auf einem Siliziumträger (5) als Wellenleiter-Fotodiode (3) aufigebaut ist

5. Transceiver nach Anspruch 1 bis 3, **dadurch gekennzeichnet, daß** die Laserquelle (2) einen Halbleiterlaser und ein wellenlängenselektives Bragg-Gitter (6) aufweist.

6. Transceiver nach Anspruch 1 bis 3, **dadurch gekennzeichnet, dass** die Laserquelle (2) als Glaswellenleiterlaser aufgebaut und von einem Halbleiterlaser gepumpt ist.

7. Transceiver nach Anspruch 1 bis 6, **dadurch gekennzeichnet, daß** die Bandpaßfilter (7,8,9,10) durch Mach-Zebrider-Interferometer, die bzgl. der Wellenlängenselektiven Transmission als Michelson-Interferometer ausgebildet sind, mit reflexionsfreien Abschlüssen (13) gebildet werden.

## Claims

1. Transceiver in which incoming (λ_{k,d}) and outgoing (λ_{i,u}) signals each pass through at least one filter in order to separate the wavelengths, for use in a wavelength-division multiplexer transmission method, having
- an optical transmitter with a laser source (2) which can be modulated and whose wavelength is stable, and,
- a receiver (3),
**characterized in that** the filter is a reflective Michelson bandpass filter (7, 8, 9, 10).

2. Transceiver according to Claim 1, **characterized in that** the incoming and outgoing signals are at different wavelengths and are input and output via an optical fibre (4).

3. Transceiver according to Claim 1, **characterized in that** the incoming and outgoing signals are at the same wavelength and are input and output via at least two separate optical fibres (4).

4. Transceiver according to Claims 1 to 3, **characterized in that** the receiver is in the form of a waveguide photodiode (3) on a silicon substrate (5).

5. Transceiver according to Claims 1 to 3, **characterized in that** the laser source (2) has a semiconductor laser and a wavelength-selective Bragg grating (6).

6. Transceiver according to Claims 1 to 3, **characterized in that** the laser source (2) is in the form of a glass waveguide laser and is pumped by a semiconductor laser.

7. Transceiver according to Claims 1 to 6, **characterized in that** the bandpass filters (7, 8, 9, 10) are in the form of Mach-Zehnder interferometers, whose wavelength-selective transmission is in the form of Michelson interferometers with zero-reflection terminations (13).

## Revendications

1. Emetteur - récepteur dans lequel les signaux entrants (λ_{kd}) et les signaux sortants (λᵢᵤ) sont chaque fois appliqués à au moins un filtre pour séparer les longueurs d'ondes, applicable à un procédé de transmission en multiplex par longueur d'ondes, comportant
- un émetteur optique avec une source laser (2) modulable, à longueur d'ondes stable et
- un récepteur (3)
**caractérisé en ce que**
le filtre est un filtre passe-bande de Michelson à réflexion (7, 8, 9, 10).

2. Emetteur - récepteur selon la revendication 1,
**caractérisé en ce que**
les signaux entrants et les signaux sortants ont des longueurs d'ondes différentes et sont injectés ou découplés par l'intermédiaire d'une fibre optique (4).

3. Emetteur - récepteur selon la revendication 1,
**caractérisé en ce que**
les signaux entrants et sortants ont la même longueur d'ondes et sont injectés et découplés par au moins deux fibres optiques séparées (4).

4. Emetteur - récepteur selon les revendications 1 à 3,
**caractérisé en ce que**
le récepteur est réalisé sur un support en silicium (5) comme photo-diode - guide d'ondes (3).

5. Emetteur - récepteur selon les revendications 1 à 3,
**caractérisé en ce que**
la source laser (2) comporte un semi-conducteur et un réseau de Bragg (6) sélectif en longueur d'ondes.

6. Emetteur - récepteur selon les revendications 1 à 3,
**caractérisé en ce que**
la source laser (2) est formée de fibres de verre guide d'ondes et est pompée par un laser semi-conducteur.

7. Emetteur - récepteur selon les revendications 1 à 6,
**caractérisé en ce que**
les filtres passe-bande (7, 8, 9, 10) sont constitués par des interféromètres de Mach-Zehnder, réalisés comme un interféromètre Michelson pour la transmission sélective en longueur d'ondes, avec des extrémités (13) sans réflexion.
